# EUROPÄISCHE PATENTSCHRIFT

(11) **EP 3 499 044 B1**
(45) Veröffentlichungstag und Bekanntmachung des Hinweises auf die Patenterteilung: **04.05.2022**
(21) Anmeldenummer: 17208114.3
(22) Anmeldetag: 18.12.2017
(51) Int. Cl.: F04D 19/04, F04D 29/048, F04D 29/049, F04D 29/056, F04D 29/66, F16C 27/06

(54) **VAKUUMPUMPE**
VACUUM PUMP
POMPE À VIDE

(43) Veröffentlichungstag der Anmeldung: 19.06.2019
(73) Patentinhaber: PFEIFFER VACUUM GMBH, 35614 Asslar (DE)
(72) Erfinder: Wille, Thilo, 57334 Bad Laasphe (DE); Stammler, Herbert, 35396 Gießen (DE); Koci, Bernd, 35641 Schöffengrund (DE)
(74) Vertreter: Manitz Finsterwald Patent- und Rechtsanwaltspartnerschaft mbB

(56) Entgegenhaltungen:
- EP-A1- 1 619 400
- EP-A2- 1 890 041
- WO-A1-2006/117515
- WO-A1-2018/109474
- DE-A1-102015 100 048
- GB-A- 2 535 163
- US-A1- 2017 227 055

## Beschreibung

Die vorliegende Erfindung betrifft eine Vakuumpumpe nach dem Oberbegriff von Anspruch 1.

Eine derartige Vakuumpumpe ist aus der EP 1 890 041 B1 bekannt.

Zur Lagerung des Wälzlagers ist üblicherweise eine Lagervorrichtung vorgesehen, welche dem Zweck dient, eine nennenswerte axiale und/oder radiale Auslenkung der Rotorwelle gegenüber ihrer unausgelenkten Normallage sowie eine Übertragung von während des Betriebs der Turbomolekularvakuumpumpe, kurz Turbomolekularpumpe, möglicherweise auftretenden Schwingungen an ein Gehäuse der Turbomolekularpumpe zu unterbinden.

Eine Auslenkung der Rotorwelle aus ihrer Normallage kann beispielsweise die Folge einer auf die Rotorwelle wirkenden Kraft sein. Dies kann zum Beispiel während eines Abpumpvorgangs der Fall sein, wenn infolge eines für den Betriebsbereich der Turbomolekularpumpe nur teilweise bzw. unzureichend vorevakuierten Rezipienten eine erhöhte Last auf Rotorscheiben wirkt, welche an der Rotorwelle drehfest angebracht sind und durch deren Rotation eine Pumpwirkung der Turbomolekularpumpe zusammen mit feststehenden Statorscheiben erzielt wird.

Eine besonders starke Auslenkung der Rotorwelle kann dazu führen, dass die Rotorscheiben mit den Statorscheiben in Kontakt gelangen, wodurch die Rotorwelle abrupt abgebremst und die Turbomolekularpumpe schlimmstenfalls irreparabel beschädigt wird.

Um eine allzu große Auslenkung der Rotorwelle zu hemmen, sollte die Lagervorrichtung daher eine möglichst hohe Steifigkeit aufweisen. Gleichzeitig ist zur Unterbindung der Schwingungsübertragung von dem Lager auf das Gehäuse der Turbomolekularpumpe eine möglichst hohe elastische Beschaffenheit der Lagervorrichtung wünschenswert, so dass die Lagervorrichtung zwei gegensätzliche Anforderungen zu erfüllen hat.

Bislang verwendete Lagervorrichtungen aus Metallmaterialien können zwar beiden Anforderungen gerecht werden, allerdings werden zur Herstellung metallischer Lagervorrichtungen kostenintensive Fertigungsverfahren und/oder teure Metallmaterialien benötigt. Überdies lässt sich die Elastizität metallischer Lagervorrichtungen nur in einem bestimmten Umfang beeinflussen und somit nur beschränkt an die jeweiligen Gegebenheiten einer Turbomolekularpumpe anpassen.

Eine Aufgabe der Erfindung ist es daher, eine Alternative zu bisherigen Lagervorrichtungen zu schaffen, welche die vorstehenden Nachteile überwindet.

Die Aufgabe wird durch eine Lagervorrichtung mit den Merkmalen des Anspruchs 1 gelöst.

Der Erfindung liegt der allgemeine Gedanke zugrunde, durch Auswahl von geeigneten Kunststoffmaterialien aus der Fülle von verfügbaren Kunststoffmaterialien die Steifigkeits- und Elastizitätseigenschaften einer Lagervorrichtung zur Lagerung eines Lagers mit Hilfe einer zumindest abschnittsweise ein Kunststoffmaterial umfassenden Lagerkassette gezielt anzupassen. Hieraus ergibt sich der Vorteil, dass die Lagervorrichtung durch eine geeignete Materialwahl für eine Vielzahl unterschiedlicher Anwendungsgebiete einsetzbar ist.

Aufgrund der im Vergleich zu Metallmaterialien leichteren Verarbeitbarkeit von Kunststoffmaterialien ergibt sich als weiterer Vorteil, dass sich Fertigungskosten erheblich senken lassen. Die Lagerkassette kann beispielsweise auf einfache und kostengünstige Weise mittels eines Spritzgussverfahrens hergestellt werden. Es ist aber auch denkbar, die Lagerkassette in ähnlicher Weise wie eine metallische Lagerkassette durch ein Spanverfahren herzustellen. Überdies erleichtert die Verwendung von Kunststoffmaterialien die Herstellung einer Lagerkassette mittels 3D-Drucktechnologie.

Eine möglichst hohe axiale Steifigkeit der Lagervorrichtung kann insbesondere dann relevant sein, wenn neben dem in der Lagerkassette aufgenommenen Lager als weiteres Lager ein Permanentmagnetlager zur Lagerung der Rotorwelle vorgesehen ist.

Ein Permanentmagnetlager weist üblicherweise ein Paar von in radialer Gegenüberstellung angeordneten Permanentmagneten auf, wobei ein Permanentmagnet des Permanentmagnetpaares stationär und der andere an der Rotorwelle angeordnet ist. Zur Erhöhung der axialen Steifigkeit des Permanentmagnetlagers umfasst jeder Permanentmagnet mehrere axial übereinander angeordnete magnetisierte Abschnitte, wobei axial benachbarte Abschnitte im Wesentlichen entgegengesetzte Magnetisierungsrichtungen aufweisen. Überdies sind der stationäre und der wellenseitige Permanentmagnet derart in Gegenüberstellung zueinander angeordnet, dass sich radial benachbarte Abschnitte des stationären und des wellenseitigen Permanentmagneten zumindest annähernd auf gleicher axialer Höhe befinden und die Magnetisierungsrichtungen der radial benachbarten Abschnitte zumindest annähernd gleichgerichtet sind.

Wird die Rotorwelle entlang ihrer Rotationsachse, d.h. in axialer Richtung, ausgelenkt, zum Beispiel indem während eines Abpumpvorgangs eine erhöhte Last auf die Rotorscheiben wirkt, so werden radial benachbarte Abschnitte der stationären und wellenseitigen Permanentmagneten in axialer Richtung zueinander verschoben. Abstoßungs- bzw. Anziehungseffekte zwischen den verschobenen Permanentmagneten bewirken dann eine zusätzliche Auslenkung der Rotorwelle, wodurch die Auslenkung der Rotorwelle gewissermaßen einen selbstverstärkenden Effekt erfährt und die Rotorwelle noch stärker in axialer Richtung ausgelenkt wird.

Die Rotor- und Statorscheiben stellen beispielhafte Rotor- bzw. Statorelemente der Vakuumpumpe dar. Neben den Rotor- und Statorscheiben können die Rotor- bzw. Statorelemente beispielsweise auch eine oder mehrere Holweck-Rotorhülsen bzw. Holweck-Statorhülsen und/oder rotorseitige bzw. statorseitige Lagerhälften einer Lagerung der Rotorwelle umfassen.

Bei dem Wälzlager kann es sich beispielsweise um ein Kugelrollenlager, ein Kegelrollenlager, ein Zylinderrollenlager oder dergleichen handeln. Grundsätzlich ist aber auch die Verwendung eines einen Außenring und einen Innenring aufweisenden Gleitlagers denkbar, obwohl dies nicht zum Schutzumfang der Erfindung gehört. Vorteilhafte Ausbildungen der Erfindung sind den Unteransprüchen, der Beschreibung sowie den Zeichnungen zu entnehmen.

Die Lagerkassette der Lagervorrichtung lässt sich besonders einfach und kostengünstig herstellen, wenn alle Abschnitte der Lagerkassette dasselbe Kunststoffmaterial umfassen. Es ist aber auch denkbar, dass zumindest zwei Abschnitte zwei unterschiedliche Kunststoffmaterialien aufweisen. Insbesondere können auch alle Abschnitte unterschiedliche Kunststoffmaterialien umfassen. Bestehen mindestens zwei Abschnitte aus unterschiedlichen Kunststoffmaterialien, so können die unterschiedlichen Materialien eine gemeinsame Grenzfläche bilden oder aber auch graduell ineinander übergehen.

Für die Funktionsweise der Lagervorrichtung ist es unerheblich, ob die Lagerkassette einstückig ausgebildet ist oder mindestens ein Abschnitt der Lagerkassette separat hergestellt und mit den anderen Abschnitten der Lagerkassette verbunden ist.

Um eine möglichst hohe axiale und/oder radiale Steifigkeit der Lagervorrichtung zu erreichen, ist es vorteilhaft, wenn das Kunststoffmaterial ein Thermoplast ist. Ein möglicher Werkstoff aus der Gruppe der Thermoplaste ist Polyetheretherketon (PEEK). Es ist aber auch möglich, eine hohe axiale und/oder radiale Steifigkeit zu erreichen, wenn das Kunststoffmaterial ein Duroplast ist.

Ferner kann das Kunststoffmaterial zur Erhöhung der axialen und/oder radialen Steifigkeit der Lagervorrichtung faserverstärkt sein, d.h. das Kunststoffmaterial bildet dann gewissermaßen einen Faser-Verbund-Werkstoff, welcher als beispielhafte Fasern Kohlenstofffasern oder Glasfasern umfassen kann. Neben einer Faserverstärkung ist es auch möglich, dem Kunststoffmaterial zur Erhöhung der axialen und/oder radialen Steifigkeit der Lagervorrichtung Graphit oder Kohlenstoffnanoröhrchen zuzugeben. Grundsätzlich ist es auch denkbar, keramische Materialien in das Kunststoffmaterial einzubetten.

Damit die während des Betriebs durch Reibung in dem Lager auftretende Wärmeentwicklung besser abgeführt werden kann, ist es vorteilhaft, wenn das Kunststoffmaterial ein wärmeleitfähiger Kunststoff ist. Dabei kann das Kunststoffmaterial eine Wärmeleitfähigkeit von mindestens 1 W/(m·K), bevorzugt von mindestens 10 W/(m·K), und besonders bevorzugt von mindestens 20 W/(m·K) aufweisen.

Insbesondere lässt sich die Wärmeleitfähigkeit des Kunststoffmaterials durch den Anteil an beifügbaren Füllstoffen, welche sich in ihrer jeweiligen Reinform durch eine erhöhte Wärmeleitfähigkeit auszeichnen, günstig beeinflussen. Vorzugsweise lässt sich die Wärmeleitfähigkeit des Kunststoffmaterials durch Beimischung mindestens eines der folgenden Füllstoffe erhöhen: Polyamid, Polyurethan, Polybutylenterephtalat, Polyphenylensulfid, Polyetheretherketon, Polyethylen.

Weisen die einzelnen Abschnitte der Lagerkassette unterschiedliche Kunststoffmaterialien und/oder unterschiedliche Füllstoffe auf, so kann auch ein Wärmetransport hinzu einem bestimmten Bereich, zum Beispiel zu einem Kühlabschnitt, gezielt gelenkt werden.

Weiterhin besteht die Möglichkeit, die Wärmeleitfähigkeit der Lagervorrichtung durch Einbettung von metallischen Partikeln in das Kunststoffmaterial zu erhöhen. Die metallischen Partikel können beliebig geformt sein und einen Durchmesser von einigen Mikrometern (1 µm) bis wenigen Millimetern (10 mm) aufweisen. Überdies ist auch die Verwendung von monodispersen oder polydispersen Nanopartikeln mit Durchmessern von 10 bis 1000 nm denkbar.

Ferner kann die Lagervorrichtung zur Erhöhung der Wärmeleitfähigkeit zumindest abschnittsweise eine metallische Beschichtung aufweisen.

Zur besseren Lagerung des Lagers sowie zur noch weiteren Erhöhung der axialen Steifigkeit kann die Lagervorrichtung einen Kassettendeckel aufweisen, wobei das Lager vorzugsweise in axialer Richtung gesehen zwischen dem Kassettendeckel und dem Aufnahmeabschnitt der Lagerkassette aufgenommen ist.

Vorteilhafterweise sind der Kassettendeckel und/oder die Lagerkassette mit einem Kühlabschnitt versehen, welcher gewissermaßen als Wärmesenke dient, um die im Betrieb durch Reibung in dem Lager entstehende Wärmeentwicklung besser an die Umgebung abzugeben. Der Kühlabschnitt des Kassettendeckels und/oder der Lagerkassette kann in Form von passiven axial und/oder radial verlaufenden Kühlrippen oder Kühlnoppen ausgebildet sein, welche in Umfangsrichtung zumindest abschnittsweise an dem Kassettendeckel und/oder der Lagerkassette ausgebildet sind. Ferner sind auch quer zur Rotationsachse der Rotorwelle verlaufende Kühlrippen denkbar. Zusätzlich oder alternativ können der Kassettendeckel und/oder die Lagerkassette auch aktiv mittels eines Kühlfluids gekühlt werden, wobei dann der entsprechende Kühlabschnitt ferner mindestens eine rohrförmige Leitung zur Führung des Kühlfluids aufweist. Die Leitung kann den Kassettendeckel und/oder die Lagerkassette umgeben, oder in den Kassettendeckel und/oder die Lagerkassette eingefasst sein.

Damit die Lagervorrichtung eine möglichst hohe axiale Steifigkeit aufweist, ist der Kassettendeckel vorzugsweise mittels eines zusätzlichen Axialdämpfungsmittels in axialer Richtung mit dem Befestigungsabschnitt der Lagerkassette gekoppelt. Das Axialdämpfungsmittel kann beispielsweise eine Feder, insbesondere eine metallische Wellenfeder, oder ein Ring aus einem Elastomer, zum Beispiel aus Gummi oder einem beliebigen anderen weichen Kunststoffmaterial, sein.

Zur Verbesserung der Dämpfungseigenschaften der Lagervorrichtung kann die Lagerkassette eine Nut zur Aufnahme des Axialdämpfungsmittels aufweisen. Dabei kann ein Boden der Nut konkav oder konvex gewölbt sein und eine dem Boden der Nut zugewandte Seite des Axialdämpfungsmittels plan sein. Alternativ kann der Boden der Nut plan sein und die dem Boden der Nut zugewandte Seite des Axialdämpfungsmittels konkav oder konvex gewölbt sein.

Um eine Auslenkung des Verbindungsabschnitts der Lagerkassette zu einem gewissen Grad zuzulassen, weist der Kassettendeckel eine dem Verbindungsabschnitt zugewandte Aussparung auf, in welche der Verbindungsabschnitt bei einer axialen Auslenkung des Aufnahmeabschnitts eintauchen kann. Vorteilhafterweise kann bei einer Auslenkung des Verbindungsabschnitts zu dem Kassettendeckel hin der Verbindungsabschnitt an dem Kassettendeckel anschlagen, wodurch eine weitere Auslenkung in axialer Richtung beschränkt wird.

Eine möglichst hohe axiale Steifigkeit der Lagervorrichtung ist für die Betriebssicherheit der Turbomolekularpumpe von entscheidender Bedeutung, wobei die axiale Steifigkeit der Lagervorrichtung höher sein kann als die radiale Steifigkeit.

Bevorzugt liegen bzw. liegt die axiale Steifigkeit der Lagervorrichtung im Bereich zwischen 70 und 9000 N/mm, vorzugsweise zwischen 500 und 1000 N/mm und/oder die radiale Steifigkeit im Bereich zwischen 40 und 1200 N/mm, vorzugsweise zwischen 100 und 800 N/mm. An dieser Stelle sei angemerkt, dass sich die vorstehend genannten Werte der axialen bzw. radialen Steifigkeit auf eine in der Vakuumpumpe eingebaute Lagervorrichtung beziehen, wobei die Steifigkeitswerte die Steifigkeit des Außenrings des Wälzlagers gegenüber dem Gehäuse der Vakuumpumpe angeben.

Nachfolgend wird die Erfindung rein beispielhaft anhand möglicher Ausführungsformen unter Bezugnahme auf die beigefügten Zeichnungen beschrieben. Es zeigen:
- Fig. 1: eine perspektivische Ansicht einer Turbomolekularpumpe;
- Fig. 2: eine Ansicht der Unterseite der Turbomolekularpumpe von Fig. 1;
- Fig. 3: einen Querschnitt der Turbomolekularpumpe längs der in Fig. 2 gezeigten Schnittlinie A-A;
- Fig. 4: eine Querschnittsansicht der Turbomolekularpumpe längs der in Fig. 2 gezeigten Schnittlinie B-B;
- Fig. 5: eine Querschnittsansicht der Turbomolekularpumpe längs der in Fig. 2 gezeigten Schnittlinie C-C;
- Fig. 6: eine Draufsicht auf eine nicht erfindungsgemäße Lagerkassette gemäß einer ersten Ausführungsform;
- Fig. 7: eine Querschnittansicht der Lagerkassette längs der in Fig. 6 gezeigten Schnittlinie D-D;
- Fig. 8: eine Draufsicht auf eine erfindungsgemäße Lagerkassette gemäß einer zweiten Ausführungsform;
- Fig. 9: eine Querschnittansicht der Lagerkassette längs der in Fig. 8 gezeigten Schnittlinie E-E;
- Fig. 10: eine erste Draufsicht auf eine zusammengebaute erfindungsgemäße Lagervorrichtung mit der Lagerkassette von Fig. 8;
- Fig. 11: eine zweite Draufsicht auf die Lagervorrichtung von Fig. 10;
- Fig. 12: eine Querschnittansicht der Lagervorrichtung von Fig. 10 längs der in Fig. 11 gezeigten Schnittlinie F-F; und
- Fig. 13: eine Detailansicht des in Fig. 12 durch die Kreislinie G umrandeten Bereichs.

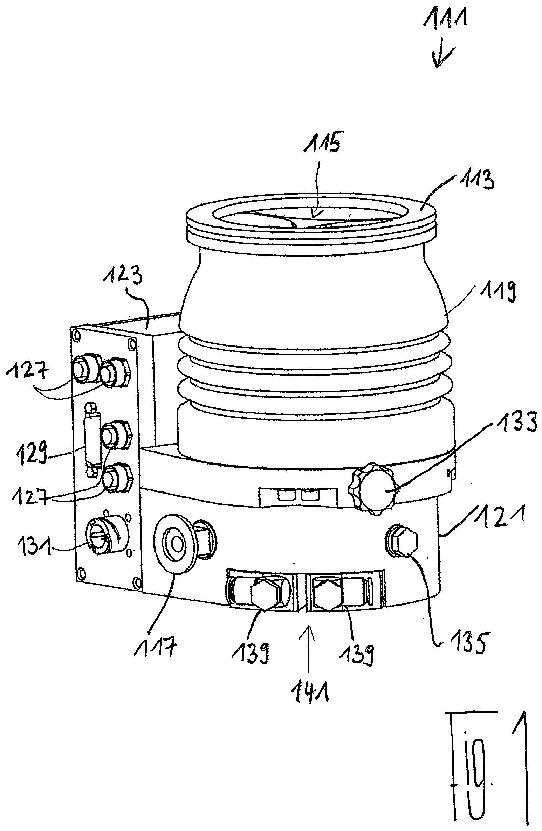

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

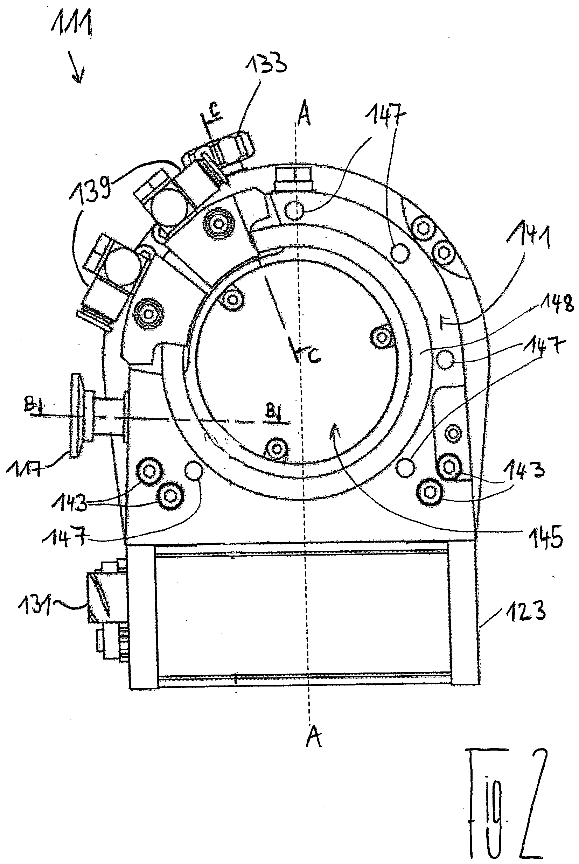

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

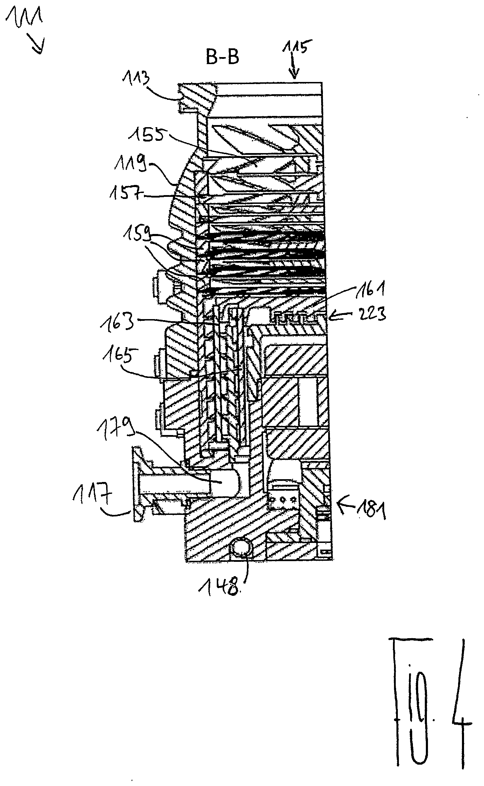

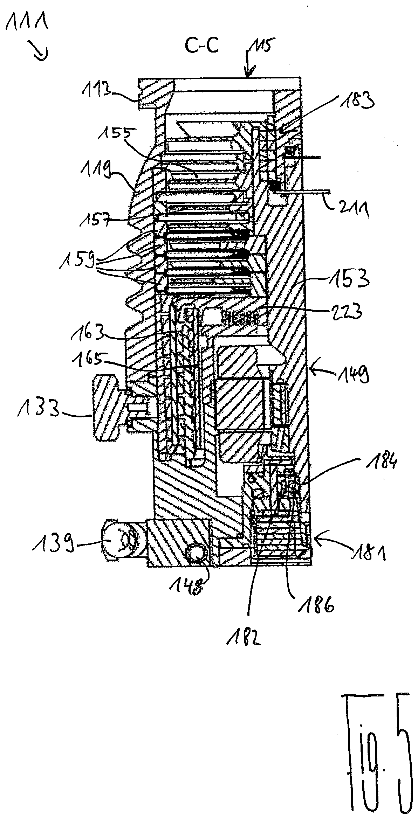

In den Figuren 2 bis 5 ist eine Kühlmittelleitung 148 dargestellt, in welcher das über die Kühlmittelanschlüsse 139 ein- und ausgeleitete Kühlmittel zirkulieren kann.

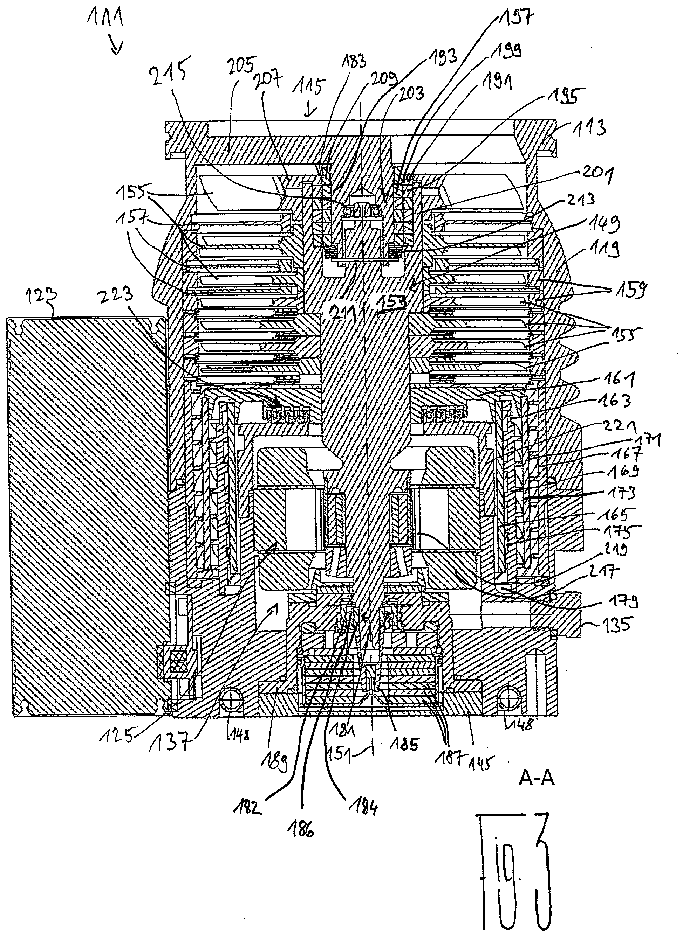

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen. Das Wälzlager 181 weist einen Außenring 182 und einen Innenring 184 auf, wobei zwischen dem Außenring 182 und dem Innenring 184 Wälzkörper 186, hier in Form von Kugeln, angeordnet sind. Das Wälzlager 181 ist in einer erfindungsgemäßen Lagervorrichtung 188 aufgenommen, wie nachstehend noch genauer erläutert wird.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

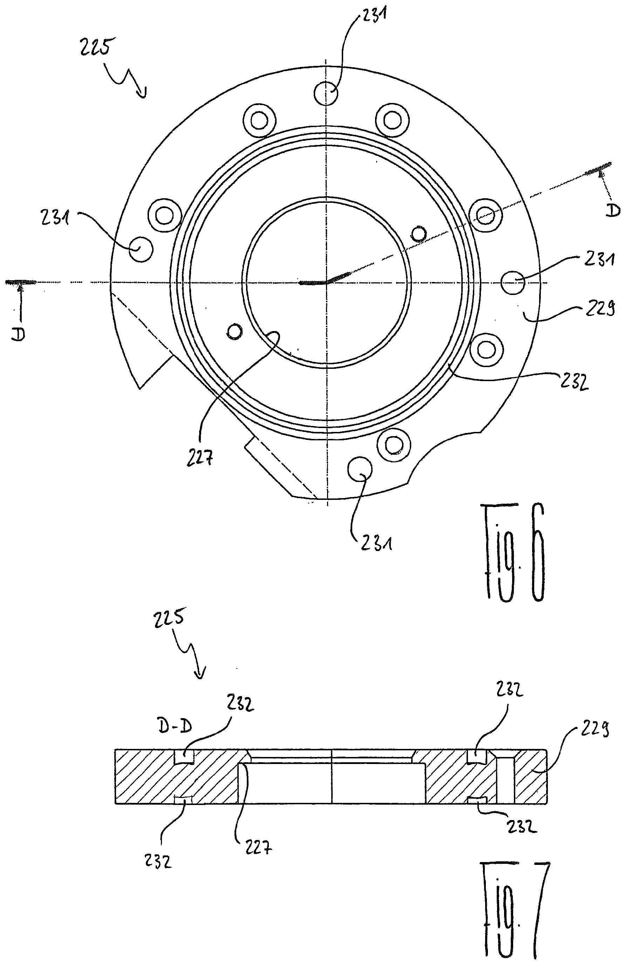

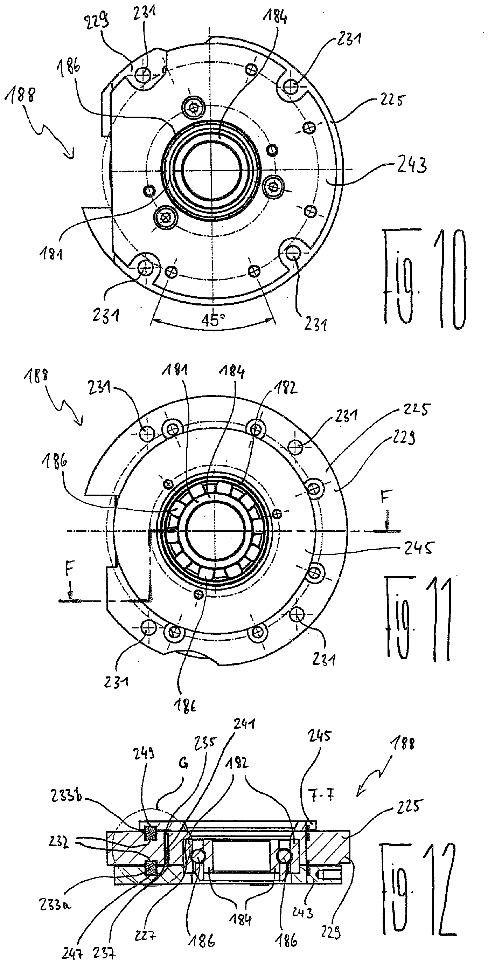

Fig. 6 und 7 zeigen in einer Draufsicht bzw. einer Querschnittansicht entlang der in Fig. 6 dargestellten Schnittlinie D-D eine erste Ausführungsform einer Lagerkassette 225 der Lagervorrichtung 188, wie sie zum Beispiel in der in Fig. 1 bis 5 dargestellten Turbomolekularpumpe 10 Verwendung findet und welche nachstehend im Zusammenhang mit Fig. 10 bis 13 noch genauer beschrieben wird. Diese erste Ausführungsform gehört nicht zur Erfindung.

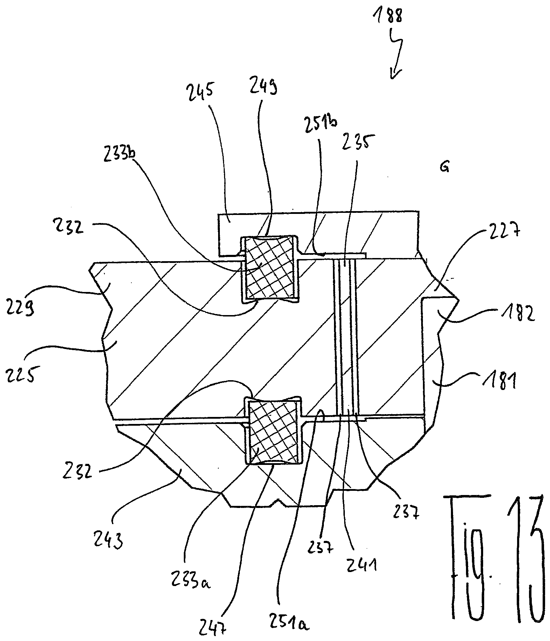

Die Lagerkassette 225 ist einstückig ausgebildet und umfasst einen Aufnahmeabschnitt 227 zur Aufnahme des Außenrings 182 des Wälzlagers 181 (Fig. 12 und 13) und einen Befestigungsabschnitt 229 zur Befestigung der Lagerkassette 225 an dem Gehäuse 119 der Turbomolekularpumpe 111. In dem dargestellten Ausführungsbeispiel umfasst sowohl der Aufnahmeabschnitt 227 als auch der Befestigungsabschnitt 229 dasselbe Kunststoffmaterial, auf dessen Beschaffenheit nachstehend noch genauer eingegangen wird. Es versteht sich, dass die Abschnitte 227, 229 der Lagerkassette 225 aber auch jeweils unterschiedliche Kunststoffmaterialien umfassen können.

Wie bereits erwähnt dient der Befestigungsabschnitt 229 der Lagerkassette 229 zur Befestigung der Lagerkassette 229 bzw. der Lagervorrichtung 188 an dem Gehäuse 119 der Turbomolekularpumpe 111. Zu diesem Zweck weist der Befestigungsabschnitt 229 in dem dargestellten Ausführungsbeispiel konkret vier Bohrungen 231 auf (Fig. 6), welche zur Aufnahme von in Fig. 6 und 7 nicht dargestellten Befestigungsmitteln, wie zum Beispiel Schrauben oder dergleichen, dienen. Es versteht sich, dass die Anzahl der Bohrungen 92 auch von vier abweichen kann, insbesondere können mehr oder weniger als vier Bohrungen 92 vorgesehen sein.

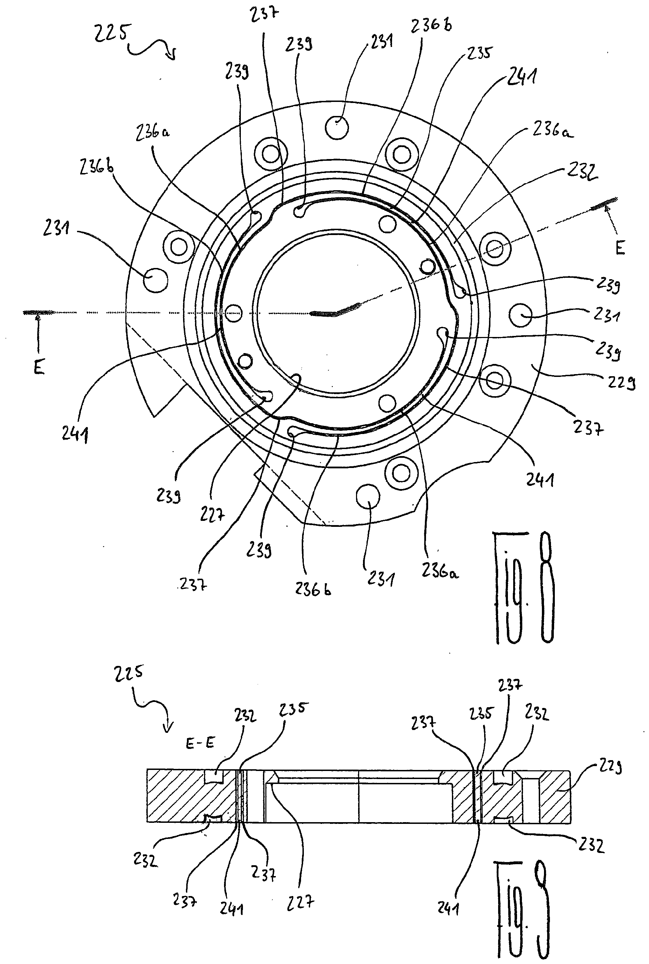

Ferner weist die Lagerkassette 225 auf gegenüberliegenden Stirnseiten jeweils eine kreisringförmige Nut 232 auf, welche zur Aufnahme eines kreisringförmigen elastischen Axialdämpfungsmittels 233 dient, wie nachstehend im Zusammenhang mit Fig. 10 bis 13 noch genauer erläutert wird. Jede Nut 232 weist einen konvex gewölbten Boden auf, wie anhand von Fig. 13 besonders deutlich zu erkennen ist. Fig. 8 und 9 zeigen in einer Draufsicht bzw. einer Querschnittansicht entlang der in Fig. 6 dargestellten Schnittlinie E-E eine zweite Ausführungsform einer Lagerkassette 225 der Lagervorrichtung 188, welche eine Ausführungsform der Erfindung ist und sich von der ersten Ausführungsform der Lagerkassette 225 darin unterscheidet, dass der Aufnahmeabschnitt 227 mittels eines Verbindungsabschnitts 235 in Bezug auf den Befestigungsabschnitt 229 axial und/oder radial auslenkbar mit dem Befestigungsabschnitt 229 verbunden ist. In dem dargestellten Ausführungsbeispiel umfassen sowohl der Aufnahmeabschnitt 227 als auch der Befestigungsabschnitt 229 sowie der Verbindungsabschnitt 235 dasselbe Kunststoffmaterial. Es versteht sich, dass die Abschnitte 227, 229, 235 der Lagerkassette 225 aber auch jeweils unterschiedliche Kunststoffmaterialien umfassen können.

In dem in Fig. 8 dargestellten Ausführungsbeispiel weist der Verbindungsabschnitt 235 konkret drei Schlitze 237 mit jeweils einem kreisbogenartigen sigmoidalen Verlauf auf. Jeder Schlitz 237 weist in radialer Richtung gesehen eine Breite zwischen 0,01 und 0,5 mm, vorzugsweise zwischen 0,1 und 0,4 mm und besonders bevorzugt zwischen 0,25 und 0,35 mm auf. An seinen jeweiligen Endbereichen geht jeder Schlitz 237 jeweils in eine tropfenartige Endbohrung 239 über.

Jeder Schlitz 237 weist einen radial nach innen versetzten ersten Abschnitt 236a und einen radial nach außen versetzten zweiten Abschnitt 236b auf. Wie anhand von Fig. 8 zu erkennen ist, verläuft der erste Abschnitt 236a eines Schlitzes 237 radial innerhalb des zweiten Abschnitts 236b eines anderen Schlitzes 237, so dass zwischen dem ersten Abschnitt 236a des einen Schlitzes 237 und dem zweiten Abschnitt 236b des anderen Schlitzes 237 ein kreisbogenartiger Verbindungssteg 241 ausgebildet ist. In dem in Fig. 8 dargestellten Ausführungsbeispiel sind konkret drei Verbindungsstege 241 ausgebildet. Es versteht sich, dass die Anzahl der Schlitze 237 von drei abweichen kann, d.h. es können auch mehr oder weniger als drei Verbindungsstege 241 vorgesehen sein. Auch können die Schlitze 237 einen anderen Verlauf aufweisen, so kann deren Verlauf auch spiralabschnittsartig sein. Jedenfalls lassen bzw. lässt sich die axiale und/oder radiale Steifigkeit einer Lagerkassette durch verschiedene Gestaltungsmöglichkeiten der Schlitze 237 gezielt anpassen.

Fig. 10 bis 13 zeigen eine Lagervorrichtung 188 mit einer Lagerkassette 225 gemäß der zweiten Ausführungsform. Es versteht sich, dass die Lagervorrichtung 188 ebenso die Lagerkassette 225 gemäß der ersten Ausführungsform umfassen kann.

Neben der Lagerkassette 225 umfasst die Lagervorrichtung 188 außerdem einen Kassettendeckel 243 (Fig. 10 und 13) sowie eine Kassettenkappe 245 (Fig.11 und 13), zwischen welchen in axialer Richtung gesehen die Lagerkassette 225 aufgenommen ist, wobei das Wälzlager 181 zwischen dem Kassettendeckel 243 und dem Aufnahmeabschnitt 227 der Lagerkassette 225 aufgenommen ist. Dabei liegt der Kassettendeckel 243 auf dem Außenring 182 des Wälzlagers 181 auf.

Der Kassettendeckel 243 und/oder die Kassettenkappe 245 können das gleiche Kunststoffmaterial wie die Lagerkassette 225 aufweisen. Es versteht sich, dass der Kassettendeckel 243 und/oder die Kassettenkappe 245 aber auch andere Materialien, insbesondere Metalle, aufweisen können.

Zur Erhöhung der axialen Steifigkeit sind sowohl der Kassettendeckel 243 als auch die Kassettenkappe 245 jeweils mittels eines Axialdämpfungsmittels 233a, 233b in axialer Richtung mit dem Befestigungsabschnitt 229 der Lagerkassette 225 gekoppelt. Das dem Kassettendeckel 243 zugeordnete Axialdämpfungsmittel 233a ist einerseits in der dem Kassettendeckel 243 zugewandten Nut 232 der Lagerkassette 225 und andererseits in einer kreisringförmigen Nut 247 des Kassettendeckels 243 aufgenommen. In entsprechender Weise ist das der Kassettenkappe 245 zugeordnete Axialdämpfungsmittel 233b einerseits in der der Kassettenkappe zugewandten Nut 232 der Lagerkassette 225 und andererseits in einer kreisringförmigen Nut 249 der Kassettenkappe 245 aufgenommen.

Wie besonders deutlich anhand von Fig. 13 zu erkennen ist, weisen die Nut 247 des Kassettendeckels 243 und die Nut 249 der Kassettenkappe 245 einen planen Boden auf. Dahingegen sind die Böden der beiden gegenüberliegenden Nuten 232 der Lagerkassette 225 konvex gewölbt. Überdies ist eine den Nuten 232 der Lagerkassette 225 zugewandte Seite des jeweiligen Axialdämpfungsmittels 233a, 233b plan ausgebildet, wohingegen die den jeweiligen Nuten 247, 249 des Kassettendeckels 243 bzw. der Kassettenkappe 245 zugewandten Seiten des jeweiligen Axialdämpfungsmittels 233a, 233b konkav ausgebildet sind. Durch einen derart gestalteten Aufbau werden bessere Dämpfungseigenschaften der Lagervorrichtung 188 erreicht.

Es versteht sich, dass auch mindestens eine der beiden gegenüberliegenden Nuten der Lagerkassette einen planen Boden und die jeweils entsprechende Nut des Kassettendeckels und/oder der Kassettenkappe einen konvex gewölbten Boden aufweisen können, wobei dann das entsprechende Axialdämpfungsmittel andersherum in die Nuten eingelegt wird, so dass eine plane Seite des Axialdämpfungsmittels einem konvexen Boden einer Nut zugewandt ist und eine konkave Seite des Axialdämpfungsmittels in Richtung eines planen Bodens einer Nut weist. Überdies ist auch denkbar, dass in entsprechender Weise ein Boden einer Nut konkav gewölbt sein kann, wohingegen eine einem planen Boden einer Nut zugewandte Seite des Axialdämpfungsmittels auch konvex gewölbt sein kann. Letztendlich ist es zur Erzielung einer Dämpfungswirkung der Lagervorrichtung 188 unerheblich, wie die Krümmung eines Bodens einer Nut bzw. einer einem planen Boden einer Nut zugewandte Seite des Axialdämpfungsmittels ausgebildet ist, so lang eine wie auch immer gekrümmte Fläche einer planen Fläche gegenübersteht.

Um eine axiale Auslenkung der Rotorwelle 153 zu einem gewissen Grad zu ermöglichen, weisen der Kassettendeckel 243 sowie die Kassettenkappe 245 jeweils eine dem Befestigungsabschnitt 229 und dem Verbindungsabschnitt 235 zugewandte Aussparung 251a, 251b auf (Fig. 13), in welche der Befestigungsabschnitt 229 und der Verbindungsabschnitt 233 bei einer axialen Auslenkung der Rotorwelle 153 bzw. des Aufnahmeabschnitts 227 eintauchen kann. An dieser Stelle sei angemerkt, dass bei der Verwendung einer Lagerkassette 225 gemäß der ersten Ausführungsform der Kassettendeckel 243 und die Kassettenkappe 245 jeweils lediglich eine dem Befestigungsabschnitt 229 zugewandte Aussparung aufweisen, so dass sich der Aufnahmeabschnitt 227 relativ zu dem Befestigungsabschnitt 229 bewegen kann.

Wie bereits erwähnt erhöhen die Axialdämpfungsmittel 233a, 233b die axiale Steifigkeit der Lagervorrichtung. Überdies trägt zu einer erhöhten axialen sowie radialen Steifigkeit der Lagervorrichtung bei, dass die Lagerkassette 225 ein hartes Kunststoffmaterial, d.h. ein Thermoplast oder ein Duroplast, umfasst. Dabei kann die Lagerkassette 225 zusätzlich mittels Fasern, wie zum Beispiel Kohlenstofffasern und/oder Glasfasern, faserverstärkt sein.

Im eingebauten Zustand der Lagervorrichtung 188 liegt die axiale Steifigkeit zwischen 70 und 9000 N/mm, vorzugsweise zwischen 500 und 1000 N/mm, und die radiale Steifigkeit zwischen 40 und 1200 N/mm, vorzugsweise zwischen 100 und 800 N/mm.

Zur Verbesserung des Wärmetransports umfasst die Lagerkassette 225 einen wärmeleitfähigen Kunststoff, dessen Wärmeleitfähigkeit sich durch Beimischung eines der folgenden Füllstoffe: Polyamid, Polyurethan, Polybutylenterephtalat, Polyphenylensulfid, Polyetheretherketon, Polyethylen günstig beeinflussen lässt. Vorzugsweise weist dann das Kunststoffmaterial der Lagerkassette 225 und gegebenenfalls des Kassettendeckels 243 und/oder der Kassettenkappe 245 eine Wärmeleitfähigkeit von mindestens 1 W/(m·K), bevorzugt von mindestens 10 W/(m·K) und besonders bevorzugt von mindestens 20 W/(m·K) auf. Überdies können zur Erhöhung der Wärmeleitfähigkeit auch metallische Partikel in das Kunststoffmaterial eingebettet sein.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 182: Außenring
- 183: Permanentmagnetlager
- 184: Innenring
- 185: Spritzmutter
- 186: Wälzkörper
- 187: Scheibe
- 188: Lagervorrichtung
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: Lagerkassette
- 227: Aufnahmeabschnitt
- 229: Befestigungsabschnitt
- 231: Bohrung
- 232: Nut
- 233a, 233b: Axialdämpfungsmittel
- 235: Verbindungsabschnitt
- 237: Schlitz
- 236a: erster Abschnitt
- 236b: zweiter Abschnitt
- 239: Endbohrung
- 241: Verbindungssteg
- 243: Kassettendeckel
- 245: Kassetten kappe
- 247: Nut
- 249: Nut
- 251a, 251b: Aussparung

## Patentansprüche

1. Vakuumpumpe, insbesondere Turbomolekularvakuumpumpe (111),
mit wenigstens einem Pumpeneinlass (115) und wenigstens einem Pumpenauslass (117),
mit Rotorelementen, die an einer Rotorwelle (135) angeordnet sind, und
mit Statorelementen, die an einem Gehäuse (119) oder an einem fest mit dem Gehäuse (119) verbundenen Bauteil angeordnet sind,
wobei sich Rotor- und Statorelemente gegenüberstehen bzw. benachbart sind, und
wobei wenigstens zwei Lager zur Lagerung der Rotorwelle (135) vorgesehen sind, von welchen Lagern ein erstes Lager einem Hochvakuumbereich, insbesondere dem wenigstens einen Pumpeneinlass (115), zugeordnet ist und ein zweites Lager einem Vorvakuumbereich, insbesondere dem wenigstens einen Pumpenauslass (117), zugeordnet ist,
wobei das Lager, welches dem Hochvakuumbereich zugeordnet ist, ein schmiermittelfreies Lager, insbesondere ein Permanentmagnetlager (183), ist und das Lager, welches dem Vorvakuumbereich zugeordnet ist, ein Wälzlager (181) ist,
wobei das Wälzlager (181) einen Außenring (182) und einen Innenring (184) aufweist und zwischen dem Außenring (182) und dem Innenring (184) Wälzkörper (186) angeordnet sind,
die Vakuumpumpe ferner umfassend:
eine Lagervorrichtung (188) mit einer Lagerkassette (225) zur Lagerung des Wälzlagers (181),
wobei die Lagerkassette (225) wenigstens teilweise ein Kunststoffmaterial aufweist und einen Aufnahmeabschnitt (227) zur Aufnahme des Außenrings (182) des Wälzlagers (181) und einen Befestigungsabschnitt (229) zur Befestigung der Lagerkassette (225) an dem Gehäuse (119) oder an einem mit dem Gehäuse (119) fest verbundenen Bauteil umfasst,
wobei der Aufnahmeabschnitt und der Befestigungsabschnitt mittels eines Verbindungsabschnitts (235) verbunden sind,
wobei der Verbindungsabschnitt eine Mehrheit von Schlitzen (237) mit jeweils einem kreisbogenartigen sigmoidalen oder spiralabschnittsartigen Verlauf aufweist, wobei zwischen zwei Schlitzen jeweils ein kreisbogenartiger Verbindungssteg (241) ausgebildet ist,
**dadurch gekennzeichnet, dass**
der Aufnahmeabschnitt (227) und der Befestigungsabschnitt (229) der Lagerkassette (225) ein Kunststoffmaterial aufweisen und der Verbindungsabschnitt (235) ebenfalls ein Kunststoffmaterial aufweist.

2. Vakuumpumpe nach Anspruch 1, 2.
**dadurch gekennzeichnet, dass**
alle Abschnitte (227, 229, 235) der Lagerkassette (225) dasselbe Kunststoffmaterial umfassen oder zumindest zwei Abschnitte unterschiedliche Kunststoffmaterialien aufweisen.

3. Vakuumpumpe nach zumindest einem der vorstehenden Ansprüche,
**dadurch gekennzeichnet, dass**
die Lagerkassette (225) einstückig ausgebildet ist oder mindestens ein Abschnitt der Lagerkassette (225) ein zu den anderen Abschnitten der Lagerkassette (225) separates Bauteil ist.

4. Vakuumpumpe nach zumindest einem der vorstehenden Ansprüche,
**dadurch gekennzeichnet, dass**
das Kunststoffmaterial ein Thermoplast oder ein Duroplast ist.

5. Vakuumpumpe nach zumindest einem der vorstehenden Ansprüche,
**dadurch gekennzeichnet, dass**
das Kunststoffmaterial faserverstärkt ist.

6. Vakuumpumpe nach zumindest einem der vorstehenden Ansprüche,
**dadurch gekennzeichnet, dass**
das Kunststoffmaterial ein wärmeleitfähiger Kunststoff ist.

7. Vakuumpumpe nach zumindest einem der vorstehenden Ansprüche,
**dadurch gekennzeichnet, dass**
das Kunststoffmaterial eine Wärmeleitfähigkeit von mindestens1 W/(m·K), bevorzugt von mindestens 10 W/(m·K), und besonders bevorzugt von mindestens 20 W/(m·K) aufweist.

8. Vakuumpumpe nach zumindest einem der vorstehenden Ansprüche,
**dadurch gekennzeichnet, dass**
das Kunststoffmaterial mindestens einen der folgenden Füllstoffe umfasst: Polyamid, Polyurethan, Polybutylenterephtalat, Polyphenylensulfid, Polyetheretherketon, Polyethylen.

9. Vakuumpumpe nach zumindest einem der vorstehenden Ansprüche,
**dadurch gekennzeichnet, dass**
in das Kunststoffmaterial metallische Partikel eingebettet sind.

10. Vakuumpumpe nach zumindest einem der vorstehenden Ansprüche,
**dadurch gekennzeichnet, dass**
die Lagervorrichtung (188) einen Kassettendeckel (245) zur axialen Fixierung des Wälzlagers (181) an dem Aufnahmeabschnitt (227) der Lagerkassette (225) aufweist.

11. Vakuumpumpe nach Anspruch 10,
**dadurch gekennzeichnet, dass**
der Kassettendeckel (245) mittels eines Axialdämpfungsmittels (233a) in axialer Richtung mit dem Befestigungsabschnitt (229) der Lagerkassette (225) gekoppelt ist.

12. Vakuumpumpe nach Anspruch 11,
**dadurch gekennzeichnet, dass**
die Lagerkassette (225) eine Nut (232) zur Aufnahme des Axialdämpfungsmittels (233a, 233b) aufweist,
insbesondere wobei ein Boden der Nut (232) gewölbt ist und eine dem Boden der Nut (232) zugewandte Seite des Axialdämpfungsmittels (233a, 233b) plan ist oder wobei ein Boden der Nut (232) plan ist und eine dem Boden der Nut (232) zugewandte Seite des Axialdämpfungsmittels (233a, 233b) gewölbt ist.

13. Vakuumpumpe nach zumindest einem der Ansprüche 10 bis 12,
**dadurch gekennzeichnet, dass**
der Kassettendeckel (243) eine dem Verbindungsabschnitt (235) zugewandte Aussparung (251a) aufweist, in welche der Verbindungsabschnitt (235) bei einer axialen Auslenkung des Aufnahmeabschnitts (227) eintauchen kann.

14. Vakuumpumpe nach zumindest einem der vorstehenden Ansprüche, **dadurch gekennzeichnet, dass**
die Lagervorrichtung (188) eine axiale Steifigkeit im Bereich zwischen 70 und 9000 N/mm, vorzugsweise zwischen 500 und 1000 N/mm aufweist und/oder
die Lagervorrichtung (188) eine radiale Steifigkeit im Bereich zwischen 40 und 1200 N/mm, vorzugsweise zwischen 100 und 800 N/mm aufweist.

## Claims

1. A vacuum pump, in particular a turbomolecular vacuum pump (111),
having at least one pump inlet (115) and at least one pump outlet (117),
having rotor elements which are arranged at a rotor shaft (135), and
having stator elements which are arranged at a housing (119) or at a component fixedly connected to the housing (119),
wherein rotor and stator elements are opposite one another or adjacent to one another, and
wherein at least two bearings are provided for supporting the rotor shaft (135), of which bearings a first bearing is associated with a high-vacuum region, in particular with the at least one pump inlet (115), and a second bearing is associated with a fore-vacuum region, in particular with the at least one pump outlet (117),
wherein the bearing which is associated with the high-vacuum region is a lubricant-free bearing, in particular a permanent magnet bearing (183), and the bearing which is associated with the fore-vacuum region is a rolling element bearing (181),
wherein the rolling element bearing (181) has an outer ring (182) and an inner ring (184) and rolling elements (186) are arranged between the outer ring (182) and the inner ring (184),
the vacuum pump further comprising:
a support apparatus (188) comprising a bearing cassette (225) for supporting the rolling element bearing (181),
wherein the bearing cassette (225) at least partly has a plastic material and comprises a reception section (227) for receiving the outer ring (182) of the rolling element bearing (181) and a fastening section (229) for fastening the bearing cassette (225) to the housing (119) or to a component fixedly connected to the housing (119),
wherein the reception section and the fastening section are connected by means of a connection section (235),
wherein the connection section has a plurality of slots (237), each having a circular arc-like sigmoidal course or spiral portion-like course, with a circular arc-like connection web (241) being formed between two respective slots,
**characterized in that**
the reception section (227) and the fastening section (229) of the bearing cassette (225) have a plastic material and the connection section (235) likewise has a plastic material.

2. A vacuum pump in accordance with claim 1,
**characterized in that**
all the sections (227, 229, 235) of the bearing cassette (225) comprise the same plastic material or at least two sections have different plastic materials.

3. A vacuum pump in accordance with at least one of the preceding claims, **characterized in that**
the bearing cassette (225) is formed in one piece or at least one section of the bearing cassette (225) is a component separate from the other sections of the bearing cassette (225).

4. A vacuum pump in accordance with at least one of the preceding claims, **characterized in that**
the plastic material is a thermoplastic or a thermosetting plastic.

5. A vacuum pump in accordance with at least one of the preceding claims, **characterized in that**
the plastic material is fiber-reinforced.

6. A vacuum pump in accordance with at least one of the preceding claims, **characterized in that**
the plastic material is a thermally conductive plastic.

7. A vacuum pump in accordance with at least one of the preceding claims, **characterized in that**
the plastic material has a thermal conductivity of at least 1 W/(m·K), preferably of at least 10 W/(m·K), and particularly preferably of at least 20 W/(mK).

8. A vacuum pump in accordance with at least one of the preceding claims, **characterized in that**
the plastic material comprises at least one of the following fillers: polyamide, polyurethane, polybutylene terephthalate, polyphenylene sulfide, polyether ether ketone, polyethylene.

9. A vacuum pump in accordance with at least one of the preceding claims, **characterized in that**
metallic particles are embedded in the plastic material.

10. A vacuum pump in accordance with at least one of the preceding claims, **characterized in that**
the support apparatus (188) has a cassette cover (245) for axially fixing the rolling element bearing (181) to the reception section (227) of the bearing cassette (225).

11. A vacuum pump in accordance with claim 10,
**characterized in that**
the cassette cover (245) is coupled to the fastening section (229) of the bearing cassette (225) in an axial direction by means of an axial damping means (233a).

12. A vacuum pump in accordance with claim 11,
**characterized in that**
the bearing cassette (225) has a groove (232) for receiving the axial damping means (233a, 233b),
in particular with a base of the groove (232) being arched and a side of the axial damping means (233a, 233b) facing the base of the groove (232) being planar, or with a base of the groove (232) being planar and a side of the axial damping means (233a, 233b) facing the base of the groove (232) being arched.

13. A vacuum pump in accordance with at least one of the claims 10 to 12, **characterized in that**
the cassette cover (243) has a cut-out (251a) which faces the connection section (235) and into which the connection section (235) can dip on an axial deflection of the reception section (227).

14. A vacuum pump in accordance with at least one of the preceding claims, **characterized in that**
the support apparatus (188) has an axial stiffness in the range between 70 and 9000 N/mm, preferably between 500 and 1000 N/mm and/or
the support apparatus (188) has a radial stiffness in the range between 40 and 1200 N/mm, preferably between 100 and 800 N/mm.

## Revendications

1. Pompe à vide, en particulier pompe à vide turbomoléculaire (111), comprenant
au moins une entrée de pompe (115) et au moins une sortie de pompe (117),
des éléments de rotor disposés sur un arbre de rotor (135), et
des éléments de stator disposés sur un boîtier (119) ou sur un composant solidaire du boîtier (119),
dans laquelle
les éléments de rotor et de stator sont opposés les uns aux autres ou voisins les uns des autres, et
au moins deux paliers sont prévus pour le montage de l'arbre de rotor (135), parmi lesquels un premier palier est associé à une zone de vide poussé, en particulier à ladite au moins une entrée de pompe (115), et un deuxième palier est associé à une zone de vide préliminaire, en particulier à ladite au moins une sortie de pompe (117),
le palier associé à la zone de vide poussé est un palier sans lubrifiant, en particulier un palier à aimant permanent (183), et le palier associé à la zone de vide préliminaire est un palier à roulement (181),
le palier à roulement (181) présente une bague extérieure (182) et une bague intérieure (184), et des corps de roulement (186) sont disposés entre la bague extérieure (182) et la bague intérieure (184),
la pompe à vide comprend en outre :
un dispositif de montage (188) ayant une cassette de montage (225) pour monter le palier à roulement (181),
la cassette de montage (225) comprenant au moins partiellement une matière plastique et comprenant une portion de réception (227) pour recevoir la bague extérieure (182) du palier à roulement (181) et une portion de fixation (229) pour fixer la cassette de montage (225) sur le boîtier (119) ou sur un composant solidaire du boîtier (119),
la portion de réception et la portion de fixation étant reliées au moyen d'une portion de liaison (235),
la portion de liaison présentant une pluralité de fentes (237) ayant chacune un tracé en forme d'arc de cercle sigmoïdal ou en forme de tronçon de spirale, une barrette de liaison (241) en forme d'arc de cercle étant réalisée entre deux fentes,
**caractérisée en ce que**
la portion de réception (227) et la portion de fixation (229) de la cassette de montage (225) comprennent une matière plastique, et la portion de liaison (235) comprend également une matière plastique.

2. Pompe à vide selon la revendication 1,
**caractérisée en ce que**
toutes les portions (227, 229, 235) de la cassette de montage (225) comprennent la même matière plastique, ou au moins deux portions comprennent des matières plastiques différentes.

3. Pompe à vide selon l'une au moins des revendications précédentes, **caractérisée en ce que**
la cassette de montage (225) est réalisée d'une seule pièce, ou au moins une portion de la cassette de montage (225) est un composant séparé des autres portions de la cassette de montage (225).

4. Pompe à vide selon l'une au moins des revendications précédentes, **caractérisée en ce que**
la matière plastique est une matière thermoplastique ou une matière thermodurcissable.

5. Pompe à vide selon l'une au moins des revendications précédentes, **caractérisée en ce que**
la matière plastique est renforcée par des fibres.

6. Pompe à vide selon l'une au moins des revendications précédentes, **caractérisée en ce que**
la matière plastique est un plastique thermoconducteur.

7. Pompe à vide selon l'une au moins des revendications précédentes, **caractérisée en ce que**
la matière plastique présente une conductivité thermique d'au moins 1 W/(m·K), de préférence d'au moins 10 W/(m·K), et de manière particulièrement préférée d'au moins 20 W/(m·K).

8. Pompe à vide selon l'une au moins des revendications précédentes, **caractérisée en ce que**
la matière plastique comprend au moins une des matières de charge suivantes : polyamide, polyuréthane, polytéréphtalate de butylène, polysulfure de phénylène, polyétheréthercétone, polyéthylène.

9. Pompe à vide selon l'une au moins des revendications précédentes, **caractérisée en ce que**
des particules métalliques sont incorporées dans la matière plastique.

10. Pompe à vide selon l'une au moins des revendications précédentes, **caractérisée en ce que**
le dispositif de montage (188) comprend un couvercle de cassette (245) pour la fixation axiale du palier à roulement (181) sur la portion de réception (227) de la cassette de montage (225).

11. Pompe à vide selon la revendication 10,
**caractérisée en ce que**
le couvercle de cassette (245) est couplé à la portion de fixation (229) de la cassette de montage (225) en direction axiale par un moyen d'amortissement axial (233a).

12. Pompe à vide selon la revendication 11,
**caractérisée en ce que**
la cassette de montage (225) présente une rainure (232) pour recevoir le moyen d'amortissement axial (233a, 233b),
en particulier un fond de la rainure (232) étant bombé, et une face du moyen d'amortissement axial (233a, 233b) tournée vers le fond de la rainure (232) étant plane, ou un fond de la rainure (232) étant plan et une face du moyen d'amortissement axial (233a, 233b) tournée vers le fond de la rainure (232) étant bombée.

13. Pompe à vide selon l'une au moins des revendications 10 à 12, **caractérisée en ce que**
le couvercle de cassette (243) présente un évidement (251a) tourné vers la portion de liaison (235), dans lequel la portion de liaison (235) peut s'enfoncer lors d'une déviation axiale de la portion de réception (227).

14. Pompe à vide selon l'une au moins des revendications précédentes, **caractérisée en ce que**
le dispositif de montage (188) présente une rigidité axiale dans la plage comprise entre 70 et 9000 N/mm, de préférence entre 500 et 1000 N/mm, et/ou
le dispositif de montage (188) présente une rigidité radiale dans la plage comprise entre 40 et 1200 N/mm, de préférence entre 100 et 800 N/mm.
